# EUROPÄISCHE PATENTANMELDUNG

(11) **EP 4 572 096 A1**
(43) Veröffentlichungstag der Anmeldung: **18.06.2025**
(21) Anmeldenummer: 24214562.1
(22) Anmeldetag: 21.11.2024
(51) Int. Cl.: H02K 1/276, H02K 15/035

(54) **ROTORBLECHPAKET FÜR EINE ELEKTRISCHE MASCHINE MIT ABSCHLUSSBLECHEN ZUR HALTEN EINES MAGNETEN**

(30) Priorität: 12.12.2023 DE 102023134858
(71) Anmelder: Valeo eAutomotive Germany GmbH, 91056 Erlangen (DE)
(72) Erfinder: SCHLERETH, Alexander, 97616 Bad Neustadt a. d. Saale (DE); KESSLER, Bernhard, 97616 Bad Neustadt a. d. Saale (DE); TOURAIN, Guillaume, 91056 Erlangen (DE); SAUVIGNET, Andre, 91056 Erlangen (DE)
(74) Vertreter: Valeo Powertrain Systems

(57) **Zusammenfassung**

Ein Rotorblechpaket (3) für einen Rotor (1) einer elektrischen Maschine weist eine Mehrzahl axial aufeinander gestapelter Rotorbleche (7) auf, die jeweils eine Ausnehmung (9) aufweisen, wobei die Ausnehmungen (9) eine Magnettasche (8) zum Aufnehmen eines Rotormagneten (10) bilden, wobei das Rotorblechpaket (3) ein an seiner Axialseite angeordnetes Abschlussblech (12) mit einer weiteren Ausnehmung (13) aufweist, welche mit der Ausnehmung (9) des benachbarten Rotorblechs (7) axial fluchtet und gegenüber der Ausnehmung (9) des benachbarten Rotorblechs (7) verengt ist.

## Beschreibung

Die Erfindung betrifft ein Rotorblechpaket für einen Rotor einer elektrischen Maschine, welches eine Mehrzahl axial aufeinander gestapelter Rotorbleche aufweist, die jeweils eine Ausnehmung (bzw. ein Loch) aufweisen, wobei die Ausnehmungen eine Magnettasche zum Aufnehmen eines Rotormagneten bilden. Ferner betrifft die Erfindung einen Rotor für eine elektrische Maschine, eine elektrische Maschine mit einem Rotor, ein Fahrzeug mit einer elektrischen Maschine und ein Herstellungsverfahren für einen Rotor einer elektrischen Maschine.

Ein permanenterregter Rotor gemäß dem Stand der Technik weist ein Rotorblechpaket mit einer Mehrzahl axial aufeinander gestapelter Rotorbleche auf, wobei die Axialrichtung parallel zur Rotationsachse des Rotors verläuft.

In dem Rotorblechpaket sind mehrere als "Rotormagnete" bezeichnete Permanentmagnete angeordnet, die zum Erzeugen eines Rotormagnetfelds dienen. Zum Aufnehmen der Rotormagnete verfügt das Rotorblechpaket über Magnettaschen, die sich jeweils von einer Axialseite des Rotorblechpakets bis zu seiner gegenüberliegenden Axialseite erstrecken. Weiterhin weist der Rotor eine Rotorwelle auf, die sich axial durch eine zentrale Durchgangsöffnung des Rotorblechpakets erstreckt.

Bei Herstellen des Rotors können die Rotormagnete in dem Rotorblechpaket angeordnet werden, bevor das Rotorblechpaket auf der Rotorwelle montiert wird.

So wird insbesondere bei einem sogenannten "geschrägten" Rotor verfahren. Auf der Rotorwelle eines solchen Rotors werden mehrere Rotorblechpakete bzw. Rotorsegmente montiert, wobei die Magnetpole eines Rotorblechpakets gegeneinander den Magnetpolen eines anderen Rotorblechpakets um die Rotationsachse des Rotors verdreht sind.

Zum Anordnen der Rotormagnete in dem Rotorblechpaket wird das Rotorblechpaket derart ausgerichtet, dass seine Rotationsachse vertikal verläuft. Danach werden die Rotormagnete von oben in die Magnettaschen des Rotorblechpakets eingeführt. Dabei besteht die Gefahr, dass die Rotormagnete aufgrund der Schwerkraft nach unten aus dem Rotorblechpaket herausfallen bzw. herausrutschen. Diese Gefahr besteht auch bei einem weiteren Herstellungsschritt, bei dem das Rotorblechpaket von oben auf die Rotorwelle aufgeschoben wird, und beim Transport des Rotorblechpakets zu diesem Herstellungsschritt.

Nach dem Befestigen aller Rotorblechpakete auf der Rotorwelle können die Rotormagnete mit einer Vergussmasse vergossen werden, um die Rotormagnete zuverlässig zu befestigen, so dass sich die Rotormagnete beim Betrieb der elektrischen Maschine nicht lockern bzw. lösen.

Die Aufgabe der Erfindung besteht darin, ein Herausfallen der Rotormagnete eines Rotors aus dessen Rotorblechpaket beim Montieren des Rotors zu vermeiden.

Die Aufgabe wird mit einem Rotorblechpaket gemäß der Erfindung gelöst, welches ein an seiner Axialseite angeordnetes Abschlussblech mit einer weiteren Ausnehmung aufweist, welche mit der Ausnehmung des benachbarten Rotorblechs axial fluchtet und gegenüber der Ausnehmung des benachbarten Rotorblechs verengt ist.

Bei Montieren des Rotors, wenn das Rotorblechpaket derart ausgerichtet ist, dass seine Rotationsache vertikal verläuft und sich das Abschlussblech an der Unterseite des Rotorblechpakets befindet, blockiert die Verengung das Herausrutschen bzw. Herausfallen eines in die Magnettasche eingesetzten Rotormagneten aus dem Rotorblechpaket. Ferner ermöglicht die Ausnehmung des Abschlussblechs, dass beim späteren Vergießen des Rotormagneten flüssige Vergussmasse nach unten aus dem Rotorblechpaket abfließen kann, womit das Entstehen unerwünschter Lufteinschlüsse in der Vergussmasse vermieden wird, welche in der Magnettasche verbleibt.

Neben der genannten Ausnehmung kann jedes Rotorblech weitere Ausnehmungen aufweisen, die weitere Magnettaschen zum Aufnehmen weiterer Rotormagneten bilden. In diesem Fall kann auch das Abschlussblech weitere Ausnehmungen aufweisen, die jeweils mit einer Ausnehmung des benachbarten Rotorblechs axial fluchten und gegenüber dieser Ausnehmung verengt sind.

Weiterhin kann das Rotorblechpaket eine axiale Durchgangsöffnung aufweisen, durch die eine Rotorwelle geführt werden kann.

Bei einer Ausführungsform des Rotorblechpakets ist die Ausnehmung des Abschlussblechs identisch mit der Ausnehmung des benachbarten Rotorblechs ausgebildet, abgesehen von einem oder mehreren die Verengung bildenden Vorsprüngen, die in die Ausnehmung des Abschlussblechs ragen. Dadurch muss das zum Herstellen des Abschlussblechs verwendete Stanzwerkzeug gegenüber dem zum Herstellen des benachbarten Rotorblechs verwendeten Stanzwerkzeug kaum modifiziert werden. Die identische Ausbildung kann so verstanden werden, dass beide Ausnehmungen dieselbe Form, Anordnung und Ausrichtung auf dem Rotorblech haben.

Optional weist die Ausnehmung des Abschlussblechs zwei einander gegenüberliegende Randabschnitte auf, wobei die Vorsprünge an beiden Randabschnitten angeordnet sind. Mit anderen Worten sind die Vorsprünge auf beide Randabschnitte verteilt. Damit kann das Verkippen eines an der Verengung anliegenden Rotormagneten vermieden werden. Die beiden Randabschnitte können beispielsweise gerade ausgebildet sein, wobei sie parallel zueinander verlaufen oder einen Winkel bilden können. Alternativ dazu ist es auch möglich, dass alle Vorsprünge an nur einem Randabschnitt angeordnet sind.

Insbesondere kann ein Vorsprung an einem ersten Randabschnitt angeordnet sein, wobei ein Punkt, der dem Vorsprung auf dem zweiten Randabschnitt gegenüberliegt, zwischen zwei an dem zweiten Randabschnitt angeordneten Vorsprüngen liegt, beispielsweise in der Mitte zwischen beiden Vorsprüngen. Damit kann ein Verkippen des Rotormagneten mit einer minimalen Anzahl von Vorsprüngen, nämlich nur drei Vorsprüngen, vermieden werden.

Ferner ist es möglich, dass ein Vorsprung oder jeder Vorsprung einen kreissegmentförmigen Endabschnitt aufweist. Damit ist der Endabschnitt besonders stabil ausgebildet, so dass ein unerwünschtes Verbiegen des Endabschnitts vermieden wird.

Die Aufgabe wird ferner mit einem Rotor gemäß der Erfindung gelöst, der eine Rotorwelle mit einem darauf angeordneten, insbesondere befestigten, erfindungsgemäßen Rotorblechpaket aufweist. In der Magnettasche des Rotorblechpakets ist ein Rotormagnet aufgenommen, der an der Verengung axial anliegt. Mit der Verengung wird vermieden, dass der Rotormagnet beim Montieren des Rotors aus der Magnettasche herausrutscht bzw. herausfällt.

In der Magnettasche können neben dem Rotormagneten weitere Rotormagnete aufgenommen sein, wobei die Rotormagnete insbesondere axial aneinandergereiht sein können. Ferner kann der Rotor weitere Magnettaschen aufweisen, in denen jeweils ein Magnet oder mehrere Magnete derart aufgenommen sind.

Bei einer Ausführungsform des Rotors ist zwischen dem Rotormagnet und der Mehrzahl axial aufeinander gestapelter Rotorbleche ein Freiraum gebildet, der für eine Vergussmasse vorgesehen ist, mit welcher der Rotormagnet vergossen werden kann. Die Ausnehmung des Abschlussblechs ist dann so angeordnet, dass sie mit dem Freiraum axial fluchtet. Dadurch kann in den Freiraum geflossene Vergussmasse besonders gut aus dem Freiraum abfließen, womit das Entstehen unerwünschter Lufteinschlüsse in der im Freiraum verbleibenden Vergussmasse vermieden wird.

Bei einer weiteren Ausführungsform des Rotors ist auf der Rotorwelle ein weiteres Rotorblechpaket angeordnet, das dem vorgenannten Rotorblechpaket entspricht. Hierbei sind Magnetpole beider Rotorblechpakete um die Rotorwelle bzw. Rotationsachse des Rotors gegeneinander verdreht. Mit anderen Worten sind Magnetpole eines der Rotorblechpakete gegenüber Magnetpolen des anderen Rotorblechpakets verdreht. Auf diese Weise lässt sich das Rotationsverhalten des Rotors verbessern.

Bei einer weiteren Ausführungsform des Rotors ist jeder der Rotormagnete mit einer Vergussmasse vergossen. Dadurch sind die Rotormagnete zuverlässig im Rotorblechpaket fixiert, sodass sich die Rotormagnete beim Betrieb der elektrischen Maschine nicht lockern oder lösen.

Die Aufgabe wird ferner mit einer elektrischen Maschine gemäß der Erfindung gelöst, die einen erfindungsgemäßen Rotor und einen Stator aufweist, bezüglich dem der Rotor drehbar gelagert ist.

Weiterhin wird die Aufgabe mit einem Fahrzeug gelöst, das eine erfindungsgemäße elektrische Maschine aufweist, die zum Antreiben des Fahrzeugs eingerichtet ist.

Außerdem wir die Aufgabe mit einem Herstellungsverfahren für einen Rotor gemäß der Erfindung gelöst, bei dem folgende Verfahrensschritte ausgeführt werden:
- Ausrichten eines Rotorblechpakets, so dass eine Rotationsachse des Rotorblechpakets vertikal verläuft und das Abschlussblech des Rotorblechpakets an dessen Unterseite angeordnet ist,
- Einsetzen des Rotormagneten in die Magnettasche des ausgerichteten Rotorblechpakets, so dass der Rotormagnet an der Verengung axial anliegt,
- Ausrichten der Rotorwelle, so dass die Rotorwelle vertikal verläuft, und
- Aufschieben des ausgerichteten Rotorblechpakets mit dem Rotormagneten auf die Rotorwelle.

Bei einer Ausführungsform des Herstellungsverfahrens wird ein dem Rotorblechpaket entsprechendes weiteres Rotorblechpaket auf die Rotorwelle aufgeschoben bzw. auf der Rotorwelle befestigt, so dass Magnetpole beider Rotorblechpakete um die Rotorwelle gegeneinander verdreht sind.

Im Folgenden werden Ausführungsformen der Erfindung anhand der folgenden schematischen Figuren näher erläutert. Es zeigen
- Figur 1: eine perspektivische Ansicht eines geschrägten Rotors gemäß der Erfindung,
- Figur 2: einen Axialschnitt durch den Rotor aus Figur 1,
- Figur 3: einen weiteren Axialschnitt durch den Rotor aus Figur 1,
- Figur 4: einen Ausschnitt eines Rotorblechs des Rotors aus Figur 1,
- Figur 5: einen Ausschnitt eines Abschlussblechs des Rotors aus Figur 1.

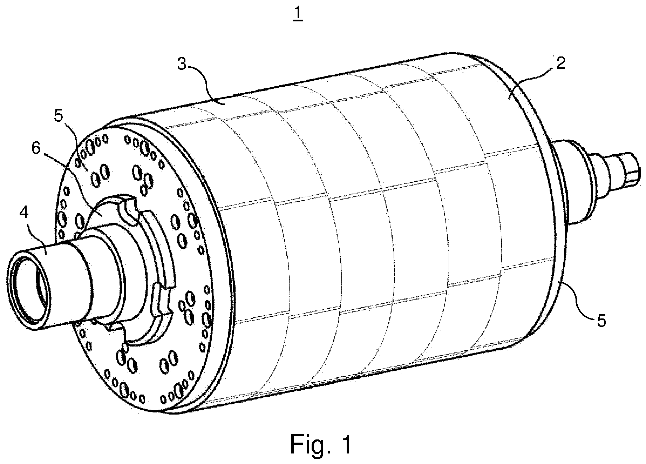

**Figur 1** zeigt eine schematische perspektivische Darstellung eines geschrägten Rotors 1 gemäß der Erfindung. Der Rotor 1 gehört zu einer elektrischen Maschine, die außerdem einen Stator aufweist, gegenüber dem der Rotor 1 drehbar gelagert ist.

Der Rotor 1 weist einen zylinderförmigen Rotorkörper 2 mit sechs axial aneinandergereihten Rotorblechpaketen 3 auf. Ein erfindungsgemäßer Rotor kann aber auch eine andere Anzahl von Rotorblechpaketen aufweisen, zum Beispiel, ein, zwei, drei, vier, fünf, sieben, acht, neun oder zehn Rotorblechpakete.

Der Rotorkörper 2 ist auf einer Rotorwelle 4 montiert, die sich durch eine axiale Durchgangsöffnung des Rotorkörpers 2 entlang einer (virtuellen) Rotationsachse des Rotors 1 erstreckt.

Die Rotorblechpakete 3 weisen jeweils mehrere von Rotormagneten (nicht sichtbar) gebildete Magnetpole auf, wobei die Magnetpole gegeneinander um die Rotorwelle 4 verdreht sind. Insbesondere sind die Magnetpole jedes Rotorblechpakets 3 gegenüber den Magnetpolen zumindest eines benachbarten Rotorblechpakets 3 verdreht. Im vorliegenden Fall ist die Verdrehung der Rotorblechpakete 3 V-förmig, was mit den dünnen Linien symbolisiert wird. Die Rotorblechpakete eines erfindungsgemäßen Rotors können jedoch auch anders verdreht sein, beispielsweise linear.

Ferner sind zwei kreisförmige Rotorendplatten 5 an gegenüberliegenden Axialseiten des Rotorkörpers 2 angeordnet. Der Rotorkörper 2 mit den Rotorendplatten 5 ist zwischen einer Wellenschulter und einer Wellenmutter 6 axial fixiert. Ein erfindungsgemäßer Rotorkörper kann aber auch auf eine andere Weise auf einer Rotorwelle axial fixiert sein, unter anderem mit einer Presspassung und/oder unter Verzicht auf Rotorendplatten.

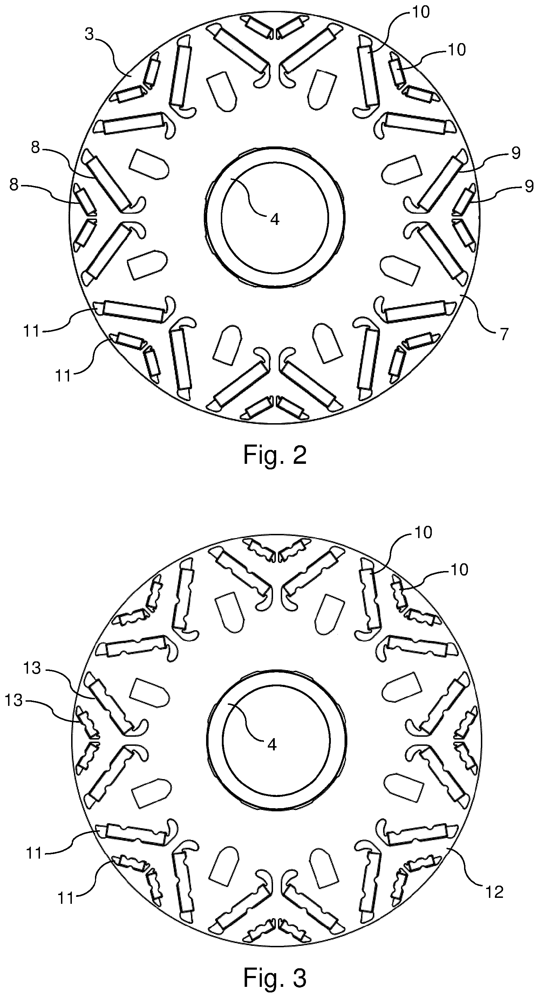

**Figur 2** zeigt einen Axialschnitt durch den Rotor 1 aus Figur 1, wobei der Axialschnitt durch ein Rotorblechpaket 3 verläuft.

Das Rotorblechpaket 3 weist eine Mehrzahl axial aufeinander gestapelter Rotorbleche 7 auf, von denen in Figur 2 nur eines sichtbar ist, welches die dahinterliegenden Rotorbleche 7 verdeckt. Die Rotorbleche 7 sind nämlich identisch ausgebildet und deckungsgleich gestapelt. Ferner weist das Rotorblechpaket 3 mehrere Magnettaschen 8 auf, die jeweils von Ausnehmungen 9 der Rotorbleche 7 gebildet sind.

In jeder Magnettasche 8 ist ein Rotormagnet 10 aufgenommen. Alternativ dazu können auch mehrere Rotormagnete in einer Magnettasche eines erfindungsgemäßen Rotorblechpakets aufgenommen sein.

Im vorliegenden Fall sind die Rotormagnete 10 in acht Gruppen angeordnet, die jeweils vier Doppel-V-förmig angeordnete Rotormagnete 10 umfassen und einen Magnetpol bilden. Es ist aber auch eine andere Anzahl und Anordnung von Rotormagneten in einem erfindungsgemäßen Rotorblechpaket möglich. Mit den Magnetpolen wird ein Rotormagnetfeld erzeugt.

An den radialen Enden jedes Rotormagneten 10 ist jeweils ein Freiraum 11 gebildet, der mit einer Vergussmasse gefüllt werden kann, beispielsweise mit einem Harz. Mit der Vergussmasse werden die Rotormagnete 10 zuverlässig im Rotorblechpaket 3 fixiert, sodass sich die Rotormagnete 10 beim Betrieb der elektrischen Maschine nicht lockern oder lösen.

Weiterhin ist die Rotorwelle 4 sichtbar, bei der aus Gründen der Übersichtlichkeit auf eine Schraffur verzichtet wurde. Zu dem Rotorblechpaket 3 gehört neben der Mehrzahl von Rotorblechen 7 auch ein an einer Axialseite des Rotorblechpakets 3 angeordnetes Abschlussblech, das in Figur 2 nicht sichtbar ist.

**Figur 3** zeigt einen weiteren Axialschnitt durch den Rotor 1 aus Figur 1, wobei der Axialschnitt an der Außenseite des Abschlussblechs 12 verläuft.

Das Abschlussblech 12 weist mehrere Ausnehmungen 13 auf, die jeweils mit einer Magnettasche 8 des Rotorblechpakets 3 bzw. einer Ausnehmung 9 des benachbarten Rotorblechs 7 des Rotorblechpakets 3 axial fluchten. Erfindungsgemäß ist jede Ausnehmung 13 gegenüber der zugehörigen Ausnehmung 9 des benachbarten Rotorblechs 7 bzw. Magnettasche 8 verengt.

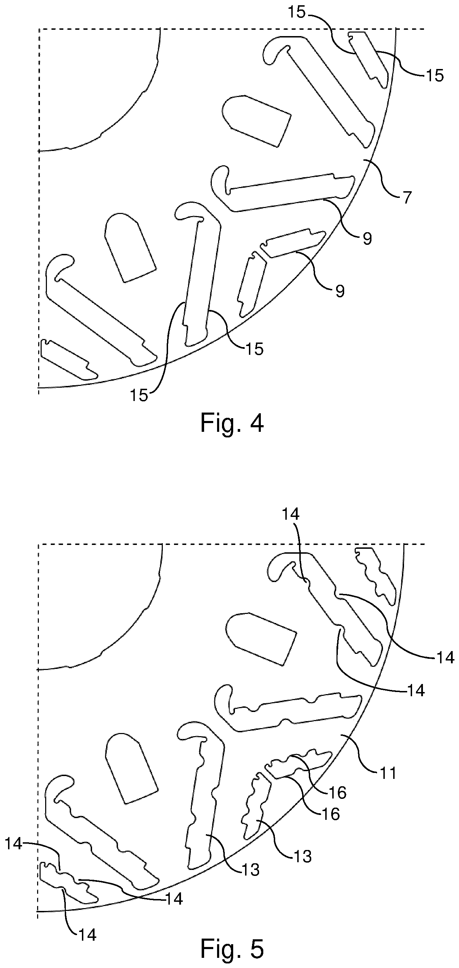

Im vorliegenden Fall ist jede Ausnehmung 13 des Abschlussblechs 12 identisch mit der zugehörigen Ausnehmung 9 des benachbarten Rotorblechs 7 ausgebildet, abgesehen von drei die Verengung bildenden Vorsprüngen, die in die Ausnehmung 13 ragen und Bezug nehmend auf Figur 5 näher erläutert werden.

Weiterhin sind die in den Magnettaschen 8 aufgenommenen Rotormagnete 10 und die Rotorwelle 4 sichtbar. Die Rotormagnete 10 liegen jeweils an der Verengung bzw. den drei die Verengung bildenden Vorsprüngen der zugehörigen Ausnehmung 13 axial an.

**Figur 4** zeigt einen Ausschnitt eines Rotorblechs 7 eines Rotorblechpakets 3 des Rotors 1 aus Figur 1.

Sichtbar sind insbesondere die Ausnehmungen 9, welche gemeinsam mit gleichartigen Ausnehmungen 9 der anderen Rotorbleche 7 des Rotorblechpakets 3, zu dem das Rotorblech 7 gehört, die Magnettaschen 8 zum Aufnehmen der Rotormagnete 10 bilden.

Jede Ausnehmung 9 ist länglich ausgebildet und weist zwei einander gegenüberliegende gerade Randabschnitte 15 auf. Im vorliegenden Fall sind zwei Arten von Ausnehmungen 9 vorhanden - nämlich größere Ausnehmungen 9 und kleinere Ausnehmungen 9. Die größeren Ausnehmungen 9 sind paarweise V-förmig angeordnet und die kleineren Ausnehmungen 9 sind ebenfalls paarweise V-förmig angeordnet, so dass zwei größere Ausnehmungen 9 und zwei kleinere Ausnehmungen 9 eine Doppel-V-Anordnung bilden.

An den Enden jeder Ausnehmung 9 befinden sich zwei Freibereiche, die bei dem fertig montierten Rotor 1 gemeinsam mit den entsprechenden Bereichen der anderen Rotorbleche 7 des Rotorblechpakets 3 die Freiräume 11 bilden. Jeder Freiraum 11 wird von einem Rotormagneten 10 und dem Rotorblechpaket 3 begrenzt.

**Figur 5** zeigt einen Ausschnitt eines Abschlussblechs 11 eines Rotorblechpakets 3 des Rotors 1 aus Figur 1.

Sichtbar sind insbesondere die Ausnehmungen 13, welche jeweils mit einer Ausnehmung 9 des benachbarten Rotorblechs 7 fluchten und gegenüber dieser Ausnehmung 9 verengt sind.

Im vorliegenden Fall ist jede Ausnehmung 13 des Abschlussblechs 12 identisch mit der zugehörigen Ausnehmung 9 des benachbarten Rotorblechs 7 ausgebildet, abgesehen von drei die Verengung bildenden Vorsprüngen 14, die in die Ausnehmung 9 ragen. Anstelle von drei Vorsprüngen kann auch eine andere Anzahl von Vorsprüngen vorgesehen sein, beispielsweise, ein, zwei, vier, fünf oder sechs Vorsprünge.

Die Vorsprünge 14 einer Ausnehmung 13 sind an zwei gegenüberliegenden Randabschnitten 16 der Ausnehmung 13 ausgeordnet. Alternativ dazu könnten die Vorsprünge auch an nur einem von zwei gegenüberliegenden Randabschnitten der Ausnehmung angeordnet sein.

Insbesondere sind die Vorsprünge 14 der Ausnehmung 13 derart angeordnet, dass ein Vorsprung 14 an einem ersten Randabschnitt 16 angeordnet ist und ein Punkt, der dem Vorsprung auf dem zweiten Randabschnitt 16 gegenüberliegt, in der Mitte zwischen zwei an dem zweiten Randabschnitt 16 angeordneten Vorsprüngen 14 liegt. Ferner sind die Vorsprünge 14 so gestaltet, dass jeder Vorsprung 14 einen kreissegmentförmigen Endabschnitt aufweist.

Bei dem Rotorblechpaket 3 fluchtet jede Ausnehmung 13 axial mit den Freiräumen 11 der zugehörigen Magnettasche 8. Insbesondere fluchten zwei Freibereiche der Ausnehmung 13, die an deren Enden ausgebildet sind, axial mit den Freiräumen 11.

Beim Herstellen des Rotors 1 können folgende Schritte ausgeführt werden:
- Ausrichten eines erfindungsgemäßen Rotorblechpakets 3, so dass die Rotationsachse des Rotorblechpakets 3 vertikal verläuft und das Abschlussblech 12 des Rotorblechpakets 3 an seiner Unterseite angeordnet ist,
- Einsetzen von Rotormagneten 10 in die Magnettaschen 8 des ausgerichteten Rotorblechpakets 3, so dass die Rotormagneten 10 an den Verengungen der Ausnehmungen 13 des Abschlussblechs 12 axial anliegen,
- Ausrichten der Rotorwelle 4, so dass die Rotorwelle vertikal verläuft, und
- Aufschieben des ausgerichteten Rotorblechpakets 3 mit den Rotormagneten 10 auf die Rotorwelle 4.

Zusätzlich kann ein dem Rotorblechpaket 3 entsprechendes weiteres Rotorblechpaket 3 auf die Rotorwelle 4 aufgeschoben werden, so dass Magnetpole beider Rotorblechpakete 3 um die Rotorwelle 4 gegeneinander verdreht sind.

### Bezugszeichenliste

- 1: Rotor
- 2: Rotorkörper
- 3: Rotorblechpaket
- 4: Rotorwelle
- 5: Rotorendplatten
- 6: Wellenmutter
- 7: Rotorblech
- 8: Magnettasche
- 9: Ausnehmung
- 10: Rotormagnete
- 11: Freiraum
- 12: Abschlussblech
- 13: Ausnehmung
- 14: Vorsprung
- 15: Randabschnitt
- 16: Randabschnitt

## Patentansprüche

1. Rotorblechpaket (3) für einen Rotor (1) einer elektrischen Maschine, welches eine Mehrzahl axial aufeinander gestapelter Rotorbleche (7) aufweist, die jeweils eine Ausnehmung (9) aufweisen,
wobei die Ausnehmungen (9) eine Magnettasche (8) zum Aufnehmen eines Rotormagneten (10) bilden,
wobei das Rotorblechpaket (3) ein an seiner Axialseite angeordnetes Abschlussblech (12) mit einer weiteren Ausnehmung (13) aufweist, welche mit der Ausnehmung (9) des benachbarten Rotorblechs (7) axial fluchtet und gegenüber der Ausnehmung (9) des benachbarten Rotorblechs (7) verengt ist.

2. Rotorblechpaket (3) gemäß Anspruch 1, wobei die Ausnehmung (13) des Abschlussblechs (12) identisch mit der Ausnehmung (9) des benachbarten Rotorblechs (7) ausgebildet ist, abgesehen von einem oder mehreren die Verengung bildenden Vorsprüngen (14), die in die Ausnehmung (13) des Abschlussblechs (12) ragen.

3. Rotorblechpaket (3) gemäß Anspruch 2, wobei die Ausnehmung (13) des Abschlussblechs (12) zwei einander gegenüberliegende Randabschnitte (16) aufweist und die Vorsprünge (14) an beiden Randabschnitten (16) angeordnet sind.

4. Rotorblechpaket (3) gemäß Anspruch 3, wobei ein Vorsprung (14) an einem ersten Randabschnitt (16) angeordnet ist und ein Punkt, der dem Vorsprung (14) auf dem zweiten Randabschnitt (16) gegenüberliegt, zwischen zwei an dem zweiten Randabschnitt (16) angeordneten Vorsprüngen (14) liegt.

5. Rotorblechpaket (3) gemäß einem der Ansprüche 2 bis 4, wobei jeder Vorsprung (14) einen kreissegmentförmigen Endabschnitt aufweist.

6. Rotor (1) für eine elektrische Maschine, mit einer Rotorwelle (4) und einem auf der Rotorwelle (4) angeordneten Rotorblechpaket (3) gemäß einem der vorhergehenden Ansprüche, wobei in der Magnettasche (8) ein Rotormagnet (10) aufgenommen ist, der an der Verengung axial anliegt.

7. Rotor (1) gemäß Anspruch 6, wobei zwischen dem Rotormagneten (10) und der Mehrzahl axial aufeinander gestapelter Rotorbleche (7) ein Freiraum (11) gebildet ist und die Ausnehmung (13) des Abschlussblechs (12) mit dem Freiraum (11) axial fluchtet.

8. Rotor (1) gemäß Anspruch 6 oder 7, mit einem dem Rotorblechpaket (3) entsprechenden weiteren Rotorblechpaket (3), das auf der Rotorwelle (4) angeordnet ist, wobei Magnetpole beider Rotorblechpakete (3) um die Rotorwelle (4) gegeneinander verdreht sind.

9. Rotor (1) gemäß einem der Ansprüche 6 bis 8, wobei die Rotormagnete (10) mit einer Vergussmasse vergossen sind.

10. Elektrische Maschine mit einem Rotor (1) gemäß einem der Ansprüche 6 bis 9 und einem Stator, gegenüber dem der Rotor (1) drehbar gelagert ist.

11. Fahrzeug mit einer elektrischen Maschine gemäß Anspruch 10, die zum Antreiben des Fahrzeugs eingerichtet ist.

12. Herstellungsverfahren für einen Rotor (1) einer elektrischen Maschine gemäß einem der Ansprüche 6 bis 9, mit den Schritten
- Ausrichten eines Rotorblechpakets (3), so dass die Rotationsachse des Rotorblechpakets (3) vertikal verläuft und das Abschlussblech (12) des Rotorblechpakets (3) an seiner Unterseite angeordnet ist,
- Einsetzen eines Rotormagneten (10) in die Magnettasche (8) des ausgerichteten Rotorblechpakets (3), so dass der Rotormagnet (10) an der Verengung axial anliegt,
- Ausrichten der Rotorwelle (4), so dass die Rotorwelle (4) vertikal verläuft, und
- Aufschieben des ausgerichteten Rotorblechpakets (3) mit dem Rotormagneten (10) auf die Rotorwelle (4).

13. Herstellungsverfahren gemäß Anspruch 12, bei dem ein dem Rotorblechpaket (3) entsprechendes weiteres Rotorblechpaket (3) auf die Rotorwelle (4) aufgeschoben wird, so dass Magnetpole beider Rotorblechpakete (3) um die Rotorwelle (4) gegeneinander verdreht sind.
